# DEMANDE DE BREVET EUROPEEN

(11) **EP 1 008 813 A1**
(43) Date de publication de la demande: **14.06.2000**
(21) Numéro de dépôt: 99403066.6
(22) Date de dépôt: 08.12.1999
(51) Int. Cl.: F24D 3/10, F16L 3/12

(54) **Dispositif de fixation d'une gaine sur un support sensiblement plan**

(30) Priorité: 10.12.1998 FR 9815605
(71) Demandeur: Rapid S.A., 75852 Paris (FR)
(72) Inventeur: Leon, Jean-Pierre René, 78800 Houilles (FR); Dutto, Christian Daniel, 92000 Nanterre (FR)
(74) Mandataire: Corret, Hélène

(57) **Abrégé**

L'invention concerne un dispositif de fixation d'une gaine de protection d'un tube ou analogue sur un support sensiblement plan.

Selon l'invention, ce dispositif présente la forme générale d'une équerre (1) qui constitue une gouttière de retenue pour ladite gaine (3), avec une première branche (10) destinée à être fixée sur ledit support (2) et une deuxième branche (11) sensiblement perpendiculaire à la première branche et destinée à recevoir l'extrémité (30) de la gaine, le tuyau (4) étant lui-même destiné à se prolonger au-delà de la deuxième branche.

L'invention s'applique à la construction de bâtiments.

## Description

L'invention concerne un dispositif de fixation d'une gaine de protection d'un tube ou analogue sur un support sensiblement plan. Un tel dispositif est destiné à la construction de bâtiments.

En effet, dans des bâtiments, il est nécessaire de faire traverser des planchers, comprenant généralement une dalle en béton, à des tubes ou analogues, notamment destinés au transport d'eau.

Un tube de ce type est placé dans une gaine de protection qui est elle-même fixée au ferraillage si on projette la réalisation d'une dalle pleine, ou placée sur la dalle existante si on réalise une chape rapportée. Il est nécessaire dans tous les cas de bien fixer les extrémités de la gaine pour qu'elle garde une position fixe lors de la coulée du béton de la dalle ou de la chape, et de prévenir la pénétration de béton ou de laitier dans la gaine pendant cette même opération. Si la gaine n'est pas bien maintenue, sa position de sortie du sol, lorsque le béton est solidifié, est aléatoire et ne permet pas un raccordement correct des appareils (radiateurs ou autres) situés après elle. Si du béton pénètre à l'intérieur de la gaine, il empêche le bon coulissement du tube dans la gaine, et donc, les opérations ultérieures de maintenance.

L'invention a pour but de pallier ces inconvénients en proposant un dispositif de fixation d'une gaine de protection d'un tube ou analogue qui permet de réaliser, en une seule opération, une dalle de plancher que le tube doit traverser, et d'éviter que des matériaux de construction ne pénètrent dans la gaine.

Ainsi, l'invention a pour objet un dispositif de fixation d'une gaine de protection d'un tube ou analogue sur un support sensiblement plan, caractérisé en ce qu'il présente la forme générale d'une équerre qui constitue une gouttière de retenue pour ladite gaine, avec une première branche destinée à être fixée sur ledit support et une deuxième branche sensiblement perpendiculaire à la première branche et destinée à recevoir l'extrémité de la gaine, ledit tuyau étant lui-même destiné à se prolonger au-delà de la deuxième branche.

De préférence, chacune desdites branches comporte une partie sensiblement en demi-cylindre pour définir ladite gouttière.

Le dispositif selon l'invention comprend avantageusement une portion de raccord arquée entre les première et deuxième branches.

De préférence, le dispositif selon l'invention comprend des moyens pour le maintien de la gaine qui consistent en un cavalier fixé sur la première branche.

La gaine de protection étant annelée, les moyens de maintien peuvent également comprendre une nervure dans le fond de la première branche qui coopère avec la gaine.

Le dispositif selon l'invention comprend avantageusement des moyens assurant sa fixation sur le support et qui sont prévus sur ladite première branche.

Dans un mode préféré de réalisation, le dispositif de fixation selon l'invention comprend également un chapeau pouvant être adapté sur la deuxième branche et comportant un orifice pour le tuyau.

De façon préférée, des fentes sont prévues dans le chapeau, lesquelles s'étendent à partir dudit orifice.

Le dispositif de fixation selon l'invention peut également comprendre des moyens de détrompage constitués par une nervure et une rainure prévues sur ladite deuxième branche et dans ledit chapeau.

Enfin, le dispositif de fixation comprend avantageusement, de part et d'autre de la première branche, des moyens du type tenon et mortaise pour l'assemblage d'au moins un autre dispositif de fixation en parallèle.

L'invention sera mieux comprise et d'autres buts, avantages et caractéristiques de celle-ci apparaîtront plus clairement à la lecture de la description qui suit et qui est faite au regard des dessins annexés, sur lesquels :
- la figure 1 est une vue éclatée en perspective d'un exemple de réalisation du dispositif de fixation selon l'invention, en position sur un support ; et
- la figure 2 est une vue similaire à la figure 1, représentant le dispositif de fixation selon l'invention à l'état monté.

Les éléments communs aux deux figures seront désignés par les mêmes repères.

Le dispositif de fixation selon l'invention comprend une pièce 1 présentant la forme générale d'une équerre.

Cette pièce 1 comprend donc une première branche 10 et une deuxième branche 11 qui s'étend sensiblement perpendiculairement à la première branche 10.

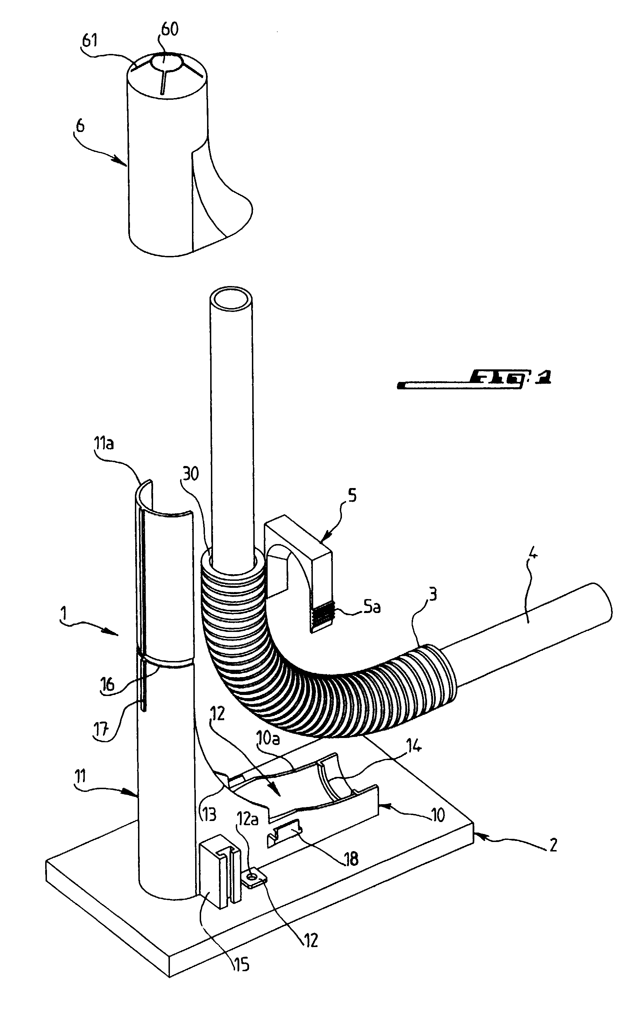

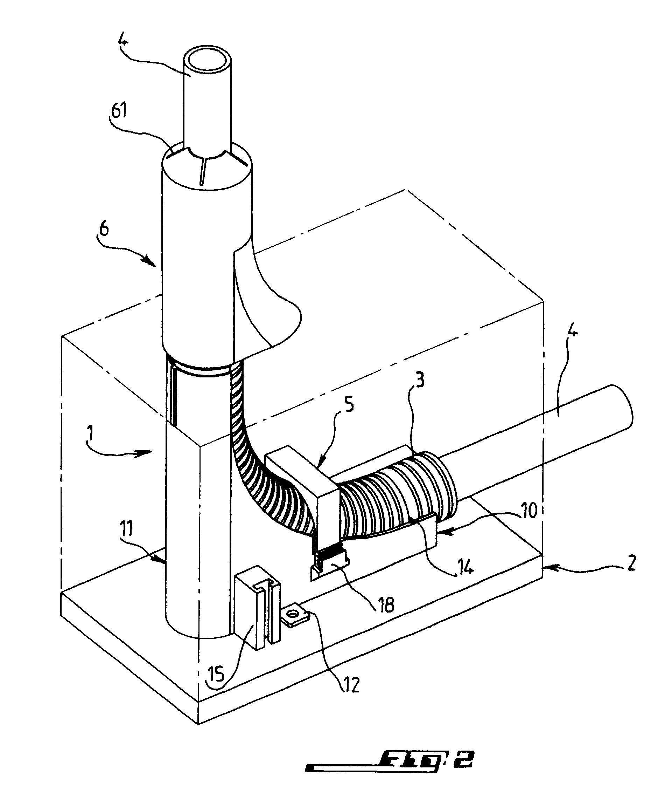

Comme l'illustrent les figures 1 et 2, cette première branche 10 est destinée à être fixée sur un support 2 sensiblement plan. Cette fixation peut notamment être assurée par des moyens 12 disposés de part et d'autre de la première branche 10. Dans l'exemple illustré sur les figures, ces moyens de fixation sont constitués par des pattes percées d'un orifice 12a, dans lequel peut être insérée une vis ou analogue (non illustrée).

Les deux branches 10 et 11 de l'équerre 1 présentent chacune une partie sensiblement en demi-cylindre 10a et 11a, ces deux parties définissant une gouttière 12, destinée à recevoir une gaine de protection 3 pour un tube 4.

Dans l'exemple de réalisation illustré sur les figures, l'équerre 1 comporte également une partie arquée 13 entre les première et deuxième branches 10 et 11. Cette partie arquée 13 présente également une surface concave qui réalise une continuité entre les deux parties semi-cylindriques 10a et 11a.

Grâce à cette partie arquée 13, la gouttière 12 peut mieux s'adapter à la forme de la gaine de protection 3 qui peut alors se trouver en appui sur le fond de la gouttière.

La gaine de protection 3 est maintenue sur l'équerre 1, après mise en place dans la gouttière 12, par un cavalier 5. Ce cavalier comporte à chacune de ses extrémités libres des moyens 5a destinés à s'encliqueter dans des moyens correspondants 18 prévus de part et d'autre de la petite branche 10. Dans l'exemple de réalisation illustré sur les figures, les moyens 5a sont constitués par une série de dents parallèles, tandis que les moyens 18 comprennent un rebord destiné à s'enclencher entre deux dents parallèles.

Les moyens de fixation de la gaine 3 peuvent également comprendre une nervure 14 prévue dans la partie semi-cylindrique 10a de la première branche 10.

La gaine de protection 3 étant du type annelé, la nervure 14 peut venir s'insérer entre deux anneaux de la gaine 3.

De part et d'autre de la première branche 10, sont prévus des moyens 15 destinés à l'assemblage d'un autre dispositif de fixation selon l'invention, parallèlement au dispositif représenté sur les figures. Ces moyens 15 sont du type tenon et mortaise, seul le moyen du type mortaise est illustré sur les figures.

Le dispositif selon l'invention comprend également un chapeau 6, avec un orifice 60 pour le tube 4 et des fentes 61 s'étendant dans le chapeau, depuis l'orifice 60.

Le montage de la gaine de protection 3 sur le dispositif de fixation va maintenant être décrit.

Le dispositif étant au préalable fixé sur le support 2, la gaine 3 est placée dans la gouttière 12 de l'équerre 1, de façon à ce que la nervure 14 vienne s'insérer entre deux anneaux de la gaine 3.

On fixe ensuite le cavalier 5 sur la petite branche 10, pour maintenir en position la gaine 3 dans l'équerre 1.

Le tube 4 peut alors être enfilé dans la gaine 3, si cela n'a pas été fait précédemment.

L'extrémité libre 30 de la gaine annelée 3 se trouve ainsi dans la deuxième branche 11, tandis que le tube 4 s'étend bien au-delà de cette deuxième branche 11.

Si nécessaire, d'autres dispositifs de fixation sont assemblés sur celui illustré à la figure 2, grâce aux moyens 15.

On réalise alors une dalle de plancher, notamment en coulant du béton. Sur la figure 2, les traits fins pointillés illustrent, de façon partielle, la dalle de béton dans laquelle l'équerre 1 est alors noyée.

Si nécessaire, la deuxième branche 11 peut être coupée au niveau de la rainure 16, si la dalle de béton ne s'étend pas au-delà de cette rainure.

On peut alors mettre en place sur le tube 4 le chapeau 6. Le tube 4 passe à travers l'orifice 60 et les fentes 61 permettent au chapeau d'être retenu sur le tuyau 4 avec une certaine élasticité.

De façon préférée, des moyens de détrompage sont prévus sur la deuxième branche 11 et sur le chapeau 6 pour faciliter la mise en place du chapeau. Ces moyens peuvent par exemple consister en une nervure 17 prévue sur la deuxième branche et en une rainure correspondante dans le chapeau 6 (non représentée).

Le chapeau 6 permet ainsi de protéger l'extrémité libre de la gaine et d'empêcher l'introduction d'éléments à l'intérieur de celle-ci, après la réalisation de la dalle.

Ainsi, le dispositif de fixation selon l'invention permet de maintenir en place, sur un support sensiblement plan, une gaine de protection ainsi que le tube qui la traverse.

La réalisation d'une dalle que doit traverser le tube 4 peut ainsi être réalisée en une seule étape, notamment par coulage de béton.

Ceci permet de simplifier considérablement la réalisation d'un plancher.

De plus, tout risque d'introduction de matériau de construction à l'intérieur de la gaine de protection est évité, grâce à un maintien efficace de la gaine dans le dispositif selon l'invention. Ainsi, la maintenance du tube 4 pourra ultérieurement être facilement réalisée, en faisant coulisser le tube à l'intérieur de la gaine de protection 3.

L'invention n'est bien sûr pas limitée au mode de réalisation qui vient d'être décrit et elle comprend tous leurs équivalents techniques ainsi que leurs combinaisons, si celles-ci entrent dans le cadre des revendications.

Enfin, les signes de référence insérés après les caractéristiques techniques figurant dans les revendications ont pour seul but de faciliter la compréhension de ces dernières et ne sauraient en limiter la portée.

## Revendications

1. Dispositif de fixation d'une gaine de protection d'un tube ou analogue sur un support sensiblement plan, caractérisé en ce qu'il présente la forme générale d'une équerre (1) qui constitue une gouttière (12) de retenue pour ladite gaine (3), avec une première branche (10) destinée à être fixée sur ledit support (2) et une deuxième branche (11) sensiblement perpendiculaire à la première branche (10) et destinée à recevoir l'extrémité (30) de la gaine, le tuyau (4) étant lui-même destiné à se prolonger au-delà de la deuxième branche (11).

2. Dispositif de fixation selon la revendication 1, caractérisé en ce que chacune desdites branches (10, 11) comporte une partie (10a, 11a) sensiblement en demi-cylindre pour définir ladite gouttière (12).

3. Dispositif de fixation selon la revendication 1 ou 2, caractérisé en ce qu'il comprend une portion de raccord (13) arquée entre lesdites première et deuxième branches (10, 11).

4. Dispositif de fixation selon l'une des revendications 1 à 3, caractérisé en ce qu'il comprend des moyens pour le maintien de la gaine, consistant en un cavalier (5) fixé sur ladite première branche (10).

5. Dispositif de fixation selon la revendication 4, caractérisé en ce que ladite gaine de protection (3) étant annelée, lesdits moyens de maintien comprennent également une nervure (14) dans le fond de la première branche (10) pour coopérer avec ladite gaine.

6. Dispositif de fixation selon l'une des revendications 1 à 5, caractérisé en ce qu'il comprend des moyens assurant sa fixation sur ledit support (2) qui sont prévus sur la première branche (10).

7. Dispositif de fixation selon l'une des revendications 1 à 6, caractérisé en ce qu'il comprend également un chapeau (6) pouvant être adapté sur ladite deuxième branche (11) et comportant un orifice (60) pour le tuyau (4).

8. Dispositif de fixation selon la revendication 7, caractérisé en ce que ledit chapeau (6) comporte des fentes (61) qui s'étendent à partir dudit orifice (60).

9. Dispositif selon la revendication 7 ou 8, caractérisé en ce qu'il comprend des moyens de détrompage constitués par une nervure et une rainure (17) prévues sur ladite deuxième branche (11) et dans ledit chapeau (6).

10. Dispositif de fixation selon l'une des revendications 1 à 9, caractérisé en ce qu'il comprend, de part et d'autre de ladite première branche (10), des moyens (15) du type tenon et mortaise pour l'assemblage d'au moins un autre dispositif de fixation en parallèle.
